# EUROPEAN PATENT APPLICATION

(11) **EP 4 354 548 A1**
(43) Date of publication of application: **17.04.2024**
(21) Application number: 22847871.5
(22) Date of filing: 01.04.2022
(51) Int. Cl.: H01M 4/525, H01M 4/505

(54) **MULTI-ELEMENT PARTITION-DOPED COBALT-FREE POSITIVE ELECTRODE MATERIAL AND PREPARATION METHOD THEREFOR**

(30) Priority: 26.07.2021 CN 202110841291
(71) Applicant: Zhejiang Pawa New Energy Co., Ltd, Shaoxing, Zhejiang 312000 (CN)
(72) Inventor: ZHANG, Bao, Shaoxing, Zhejiang 312000 (CN); DENG, Peng, Shaoxing, Zhejiang 312000 (CN); CHENG, Cheng, Shaoxing, Zhejiang 312000 (CN); LIN, Kebo, Shaoxing, Zhejiang 312000 (CN); ZHOU, Yanan, Shaoxing, Zhejiang 312000 (CN); DENG, Mengxuan, Shaoxing, Zhejiang 312000 (CN)
(74) Representative: Sach, Greg Robert
(86) International application number: PCT/CN2022/084725
(87) International publication number: WO 2023/005251

(57) **Abstract**

The present invention provides a multi-element, regionally doped, cobalt-free positive electrode material, which has a molecular formula of LiₓNiₐMn_{b}Al_{c}Mg_{d}WₑO₂, wherein 0.95≤x≤1.1, 0.5≤a≤0.9, 0.1≤b≤0.5, 0<c≤0.01, 0<d<0.01, 0<e≤0.01, and a + b = 1. The positive electrode material comprises an Al-doped region, an Mg-doped region and a W-doped region in an order from the inside to the outside. Also provided is a method of preparing the positive electrode material. The cobalt-free positive electrode material of the present invention can better adapt to a stress release by the positive electrode material regionally doped with Al, Mg, and W elements, achieving a moderate adjustment and avoiding imbalance, so that the material has more stable structure, and better rate performance and cycle performance. The method of preparing the material has a simple process, is easy to implement, and can stably prepare a positive electrode material with excellent structure and performance.

## Description

### INVENTION FIELD

The invention belongs to the field of the preparation of positive electrode materials for lithium-ion batteries, and in particular relates to a high-performance multi-element, regionally doped, cobalt-free positive electrode material and a method of preparing the same.

### BACKGROUND

With the over-exploitation of non-renewable energy sources such as oil, resource shortage and environmental pollution problems have become increasingly prominent. To solve the above problems, many countries in the world are vigorously developing new energy vehicle industry to replace fuel vehicles. As a novel power source, lithium-ion batteries are widely used in electric vehicles to reduce greenhouse gas emissions. At present, mainstream positive electrode materials, such as lithium cobalt oxide (Li₂CoO₂), lithium nickel cobalt manganese (NCM) and lithium nickel cobalt aluminate (NCA) are all cobalt-containing materials. However, China's cobalt resources are quite poor and mainly rely on imports. The price of cobalt continues to rise due to the relationship between supply and demand. And with the rapid development of the new energy vehicle market, the problem will become more prominent. Therefore, there is an urgent need to develop a novel cobalt-free electrode material.

However, cobalt-free materials currently have larger defects, such as unstable layered structures, high proportion of lithium-nickel hybrid alignment, poor cycle performance and rate performance. At the same time, the greater the proportion of highly active nickel, the lower the thermal stability of the positive electrode material, which is easy to cause thermal runaway. Therefore, researchers have carried out a large number of research work, among which the bulk-doping modification strategy is particularly outstanding. Bulk-doping can effectively improve the lithium-nickel hybrid alignment, and increase the diffusion rate of lithium ions. At the same time, it can improve the stability of the crystal structure and reduce the harm caused by phase change, thereby reducing the occurrence of cracks and improving the electrochemical performance of the positive electrode material. However, most of the existing doping means focus on uniform doping processes, while the stress distribution within the material is not even. Stabilizing the bulk structure with one element is easy to cause structural strength imbalance during the cycle, and prone to crack formation, which has poor modification effect.

### BRIEF SUMMARY OF THE INVENTION

In view of the existing problems in the prior art, the present invention provides a cobalt-free positive electrode material with high structural stability and good electrochemical performance, as well as a method which has a simple process, is easy to implement, and can be used to prepare a high-performance cobalt-free positive electrode material.

The present invention proposes the following technical solutions:
A multi-element region-doped cobalt-free positive electrode material having a molecular formula of LiₓNiₐMn_{b}Al_{c}Mg_{d}WₑO₂, wherein 0.95 ≤ x ≤ 1.1 (preferably, 0.98 ≤ x ≤ 1.05), 0.5 ≤ a ≤ 0.9, 0.1 ≤ b ≤ 0.5, 0 ≤ c ≤ 0.01, 0 < d ≤ 0.01, 0 ≤ e ≤ 0.01, a + b = 1; and the positive electrode material comprises an Al doped region, a Mg doped region and a W doped region in sequence from the inside to the outside.

In this solution, the Al doped region, the Mg doped region and the W doped region refer to an Al concentrated doped region, a Mg concentrated doped region and a W concentrated doped region, respectively. For example, the Al concentrated doped region means that the area is mainly doped with Al element. Since other doping elements Mg and W will also diffuse during the baking process of the precursor mixed with lithium, the Al concentrated doped region will comprise a small amount of Mg and W elements in addition to the predominant doping element Al, but this does not affect that the region is an Al-doped area.

Preferably, the positive electrode material has a particle size of 10 to 12 µm.

As a general inventive concept, the present invention further provides a method of preparing a multi-element, regionally doped, cobalt-free positive electrode material comprise steps of:
(1) formulating a mixed salt solution A from a soluble nickel salt and a soluble manganese salt, and formulating a soluble Al-salt solution B, a soluble Mg-salt solution C, a soluble W-salt solution D, a complexing agent solution E, and a precipitating agent solution F;
(2) adding the solutions A, B, C, D, E, and F into a reactor for staged co-precipitation reaction, wherein the solutions A, B, E, and F are concurrently passed in a first stage for reaction, the solutions A, B, E, and F are concurrently passed in the second stage for reaction, and the solutions A, C, E, and F are concurrently passed in the third stage, and stopping then adding when the particles grew to a certain particle size;
(3) washing and drying the obtained slurry to give a wet-doped cobalt-free precursor material;
(4) mixing the lithium salt and the wet-doped cobalt-free precursor via ball milling, and then performing a sintering treatment to give the cobalt-free positive electrode material.

Preferably, in step (2), the reaction stages are mainly divided into three stages: in the first stage, the solutions A, B, E, and F are added until the particles have an average particle size of 1 to 4 µm; in the second stage, the solutions A, C, E and F solutions are added until the particles have an average particle size of 2 to 8 µm; and in the third stage, the solutions A, D, E, and F are added until the particles have an average particle size of 10 to 12 µm.

Preferably, in step (2), the reaction conditions comprise: in the first stage, a stirring speed of 200-1200 rpm, more preferably 200-900 rpm; a concentration of aqueous ammonia of 5-15 g/L, further preferably 6-9 g/L; a reaction temperature of 30 to 90°C, more preferably 40 to 90°C; and a pH of 11 to 14, more preferably 11 to 13;

In the second stage, a stirring speed of 300-1100 rpm, more preferably 300-900 rpm; a concentration of aqueous ammonia of 5.2-14 g/L, further preferably 6-9 g/L; a reaction temperature of 40 to 90°C, more preferably 40 to 80°C; and a pH of 10 to 13, more preferably 10.5 to 12; and

In the third stage, a stirring speed of 400-1200 rpm, more preferably 400-1000 rpm; a concentration of aqueous ammonia of 5.2-15 g/L, further preferably 6-9 g/L; a reaction temperature of 30 to 70°C, more preferably 35 to 70°C; and a pH of 10 to 12, more preferably 10.5 to 11.9.

Preferably, in step (1), nickel and manganese metal ions have a total concentration of 0.4-10 mol/L, further preferably 3-7 mol/L, in the mixed salt solution.

Preferably, in step (1), the soluble Al salt solution has a concentration of 0.01 to 6 mol/L, more preferably 0.01 to 2 mol/L; the soluble Mg salt solution has a concentration of 0.01 to 6 mol/L, more preferably 0.01 to 2 mol/L; and the soluble W salt solution has a concentration of 0.01 to 6 mol/L, more preferably 0.01 to 2 mol/L.

Preferably, in step (1), the complexing agent solution is an aqueous ammonia solution with mass percentage of 5 to 25 wt%, more preferably 15 to 25 wt%; and the precipitant is a NaOH solution with concentration of 2 to 11 mol/L, more preferably 3 to 9 mol/L.

Preferably, in step (4), a molar ratio of the lithium salt to the wet-doped cobalt-free precursor is 1 to 1.15: 1; and the rotation speed of the ball mill is 200 to 600 rpm.

Preferably, in step (4), the sintering atmosphere is an oxygen atmosphere; and the sintering treatment conditions are: first sintering at 200-600°C for 2-9 h, and then heating to 800-1200°C and sintering for 10-30h.

Compared with the existing technology, the technical solution of the present invention has the following advantages:
(1) LiNiₐMn_{b}Al_{c}Mg_{d}WₑO₂ of the present invention can better adapt to stress release by positive electrode material regionally doped with Al, Mg, and W elements in regions, achieving a moderate adjustment and avoiding imbalance, so that the material has more stable structure, and better rate performance and cycle performance.
(2) By the wet regional co-precipitation doping of Al, Mg and W elements in the precursor stage, the present invention can not only maximize the use of the characteristics of doping elements to build a more stable crystal structure, but also facilitate to achieve a uniform distribution of the doping elements in the material, while it can reduce subsequent steps and increase the production efficiency. The preparation method of the present invention has a simple process and is easy to implement, and can stably prepare positive electrode materials with stable structure and excellent performance.
(3) The positive electrode material prepared by regional co-precipitation doping of the present invention has excellent structural stability, rate performance and long-term cycle stability.

### DETAILED DESCRIPTION OF EMBODIMENTS

Hereinafter the present invention will be further illustrated by reference to specific examples. It should be noted that what is described is only some embodiments of the present invention, rather than all embodiments, and these embodiments shall not be construed as any limitation on the protection scope defined by the appended claims of the present application. Based on the embodiments of the present invention, all other variations or modifications made by those of ordinary skill in the art without any creative effort shall fall within the protection scope of the appended claims of the present application.

### EXAMPLE 1

(1) A salt solution A (5 mol/L) was formulated with NiSO₄·6H₂O and MnSO₄·H₂O; an Al salt solution (0.5 mol/L) was formulated as B; a Mg salt solution (0.5 mol/L) was formulated as C; a W salt solution (0.5 mol/L) was formulated as D; ammonia for industrial use (25%) was used as a solution E; and a sodium hydroxide solution (8 mol/L) was formulated as F.
(2) The solutions A, B, C, D, E, and F were concurrently consecutively pumped through the respective pipelines into a reactor for reaction. In the first stage, the solutions A, B, E, and F were concurrently passed into the reactor for reaction under conditions that the ammonia concentration in the reactor was stabilized at 7.4 g/L, the pH was stabilized at 12.0, the reactor temperature was 60°C, and the stirring speed was 300 r/min, until the particles grew to 3 µm; in the second stage, the A, C, E, and F solutions were concurrently passed into the reactor for reaction under conditions that the ammonia concentration in the reactor was stabilized at 7.6 g/L, the pH was stabilized at 11.8, the reactor temperature was 55°C, and the stirring speed was 350 r/min, until the particles grew to 7 µm; and in the third stage, the solutions A, D, E, and F were concurrently passed into the reactor for reaction under conditions that the ammonia concentration in the reactor was stabilized at 7.8 g/L, the pH was stabilized at 11.3, the reactor temperature was 55°C, and the stirring speed was 450 r/min, until the particles grew to 10 µm, thereby giving a wet-doped cobalt-free positive electrode material precursor slurry.
(3) The slurry obtained in step (2) was delivered to a centrifuge for centrifugal filtration, and the resultant solids were washed, dried, sieved, and demagnetized, thereby giving a wet-doped cobalt-free positive electrode material precursor.
(4) Lithium hydroxide monohydrate and the wet-doped cobalt-free precursor were subject to mixed ball milling at a molar ratio of 1.06:1 at a rotation speed of 200 rpm for 4 h.
(5) The obtained mixed material was sintered under oxygen atmosphere at 300°C for 5 hours, and then heated to 1000°C and sintered for 19 hours, thereby giving a wet-doped cobalt-free positive electrode material.

The positive electrode material LiNi_{0.8}Mn_{0.2}Al_{0.004}Mg_{0.004}W_{0.002}O₂ prepared in this example was prepared into an electrode plate for assembling a button half-cell, which was subject to an electrochemical performance test at room temperature. The first discharge under 0.1C reached 220 mAh/g, and the first cycle efficiency reached 89%. In particular, under the 1.0C high-rate test, the first cycle discharge capacity reached 204 mAh/g. After 200 cycles, the discharge capacity was 186mAh/g, and the capacity retention rate reached 91.18%, significantly improving the problems of poor stability and rate performance of cobalt-free materials.

### EXAMPLE 2

(1) A salt solution A (5 mol/L) was formulated with NiSO₄·6H₂O and MnSO₄·H₂O; an Al salt solution (0.5 mol/L) was formulated as B; a Mg salt solution (0.5 mol/L) was formulated as C; a W salt solution (0.5 mol/L) was formulated as D; ammonia for industrial use (25%) was used as a solution E; and a sodium hydroxide solution (8 mol/L) was formulated as F.
(2) The solutions A, B, C, D, E, and F were consecutively pumped through the respective pipelines into a reactor for reaction. In the first stage, the solutions A, B, E, and F were concurrently passed into the reactor for reaction under conditions that the ammonia concentration in the reactor was stabilized at 7.4 g/L, the pH was stabilized at 12.0, the reactor temperature was 60°C, and the stirring speed was 300 r/min, until the particles grew to 2 µm; in the second stage, the A, C, E, and F solutions were concurrently passed into the reactor for reaction under conditions that the ammonia concentration in the reactor was stabilized at 7.6 g/L, the pH was stabilized at 11.8, the reactor temperature was 55°C, and the stirring speed was 350 r/min, until the particles grew to 8 µm; and in the third stage, the solutions A, D, E, and F were concurrently passed into the reactor for reaction under conditions that the ammonia concentration in the reactor was stabilized at 7.8 g/L, the pH was stabilized at 11.3, the reactor temperature was 55°C, and the stirring speed was 450 r/min, until the particles grew to 10 µm, thereby giving a wet-doped cobalt-free positive electrode material precursor slurry.
(3) The slurry obtained in step (2) was delivered to a centrifuge for centrifugal filtration, and the resultant solids were washed, dried, sieved, and demagnetized, thereby giving a wet-doped cobalt-free positive electrode material precursor.
(4) Lithium hydroxide monohydrate and the wet-doped cobalt-free precursor were subject to mixed ball milling at a molar ratio of 1.06:1 at a rotation speed of 200 rpm for 4 h.
(5) The obtained mixed material was sintered under oxygen atmosphere at 300°C for 5 hours, and then heated to 1000°C and sintered for 19 hours, thereby giving a wet-doped cobalt-free positive electrode material.

The positive electrode material LiNi_{0.8}Mn_{0.2}Al_{0.003}Mg_{0.005}W_{0.0015}O₂ prepared in this example was prepared into an electrode plate for assembling a button half-cell, which was subject to an electrochemical performance test at room temperature. The first discharge under 0.1C reached 218 mAh/g, and the first cycle efficiency reached 88%. In particular, under the 1.0C high-rate test, the first cycle discharge capacity reached 200 mAh/g. After 200 cycles, the discharge capacity was 180mAh/g, and the capacity retention rate reached 90.0%.

### COMPARATIVE EXAMPLE 1

(1) A salt solution A (5 mol/L) was formulated with NiSO₄·6H₂O and MnSO₄·H₂O; an Al salt solution (0.5 mol/L) was formulated as B; ammonia for industrial use (25%) was used as a solution E; and a sodium hydroxide solution (8 mol/L) was formulated as F.
(2) The solutions A, B, E, and F were concurrently consecutively pumped through the respective pipelines into a reactor for reaction. The ammonia concentration in the reactor was stabilized at 7.7 g/L, the pH was stabilized at 11.4, the reactor temperature was 54°C, and the stirring speed was 400 r/min, until the particles grew to 10 µm; thereby giving an Al-doped cobalt-free positive electrode material precursor.
(3) The slurry obtained in step (2) was delivered to a centrifuge for centrifugal filtration, and the resultant solids were washed, dried, sieved, and demagnetized, thereby giving a wet-doped cobalt-free positive electrode material precursor.
(4) Lithium hydroxide monohydrate and the wet-doped cobalt-free precursor were subject to mixed ball milling at a molar ratio of 1.06:1 at a rotation speed of 200 rpm for 4 h.
(5) The obtained mixed material was sintered under oxygen atmosphere at 320°C for 4.5 hours, and then heated to 960°C and sintered for 19 hours, thereby giving an Al-doped cobalt-free positive electrode material.

The positive electrode material LiNi_{0.8}Mn_{0.2}Al_{0.008}O₂ prepared in this example was prepared into an electrode plate for assembling a button half-cell, which was subject to an electrochemical performance test at room temperature. The first discharge under 0.1C reached 202 mAh/g, and the first cycle efficiency reached 85%. In particular, under the 1.0C high-rate test, the first cycle discharge capacity reached 195 mAh/g. After 200 cycles, the discharge capacity was 150mAh/g, and the capacity retention rate reached 76.92%.

The foregoing are merely preferable embodiments of the present invention, and not intended to limit the present invention. Any modification, equivalent substitution and improvement and the like made within the spirit and principle of the invention should be encompassed in the protection scope of the invention.

## Claims

1. A multi-element, regionally doped, cobalt-free positive electrode material, **characterized by** that the positive electrode material has a molecular formula of LiₓNiₐMn_{b}Al_{c}Mg_{d}WₑO₂, wherein 0.95 ≤ x ≤ 1.1, 0.5 ≤ a ≤ 0.9, 0.1 ≤ b ≤ 0.5, 0 < c ≤ 0.01, 0 < d ≤ 0.01, 0 < e ≤ 0.01, a + b = 1, and the positive electrode material comprises an Al doped region, a Mg doped region and a W doped region in sequence from the inside to the outside.

2. The multi-element, regionally doped, cobalt-free positive electrode material according to claim 1, wherein the positive electrode material has a particle size of 10-12 µm.

3. A method of preparing the multi-element, regionally doped, cobalt-free positive electrode material according to claim 1 or 2, **characterized by** comprising steps of:
(1) formulating a mixed salt solution A from a soluble nickel salt and a soluble manganese salt, and formulating a soluble Al-salt solution B, a soluble Mg-salt solution C, a soluble W-salt solution D, a complexing agent solution E, and a precipitating agent solution F;
(2) adding the solutions A, B, C, D, E, and F into a reactor for staged co-precipitation reaction, wherein the solutions A, B, E, and F are concurrently passed in a first stage for reaction, the solutions A, B, E, and F are concurrently passed in the second stage for reaction, and the solutions A, C, E, and F are concurrently passed in the third stage, and stopping then adding when the particles grew to a certain particle size;
(3) washing and drying the obtained slurry to give a wet-doped cobalt-free precursor material;
(4) mixing the lithium salt and the wet-doped cobalt-free precursor via ball milling, and then performing a sintering treatment to give the cobalt-free positive electrode material.

4. The method of preparing a multi-element, regionally doped, cobalt-free positive electrode material according to claim 3, **characterized by** that in step (2), in the first stage, a co-precipitation reaction runs until the particles have an average particle size of 1-4 µm; in the second stage, a co-precipitation reaction runs until the particles have an average particle size of 2-8 µm; and in the third stage, a co-precipitation reaction runs until the particles have an average particle size of 10-12 µm.

5. The method of preparing a multi-element, regionally doped, cobalt-free positive electrode material according to claim 3, **characterized by** that in step (2), reaction conditions in the first stage comprise: a stirring speed of 200-1200 rpm, a reaction temperature of 30-90°C, a concentration of complexing agent of 5-15 g/L, and a pH of 11-14; reaction conditions in the second stage comprise: a stirring speed of 300-1100rpm, a reaction temperature of 40-90°C, a concentration of complexing agent of 5.2-14 g/L, and a pH of 10-13; and reaction conditions in the third stage comprise: a stirring speed of 400-1200 rpm, a reaction temperature of 30-70°C, a concentration of complexing agent of 5.2-15 g/L, and a pH of 10-12.

6. The method of preparing a multi-element, regionally doped, cobalt-free positive electrode material according to any one of claims 3 to 5, **characterized by** that in step (1), nickel and manganese metal ions have a total concentration of 0.4-10 mol/L in the mixed salt solution A.

7. The method of preparing a multi-element, regionally doped, cobalt-free positive electrode material according to any one of claims 3 to 5, **characterized by** that in step (1), the soluble Al salt solution has a concentration of 0.01 to 6 mol/L, the soluble Mg salt solution has a concentration of 0.01-6 mol/L, and the soluble W salt solution has a concentration of 0.01-6 mol/L.

8. The method of preparing a multi-element, regionally doped, cobalt-free positive electrode material according to any one of claims 3 to 5, **characterized by** that, in step (1), the complexing agent solution is an aqueous ammonia solution with a concentration of 5-25 wt%, and the precipitation agent solution is a NaOH solution with a concentration of 2 to 11 mol/L.

9. The method of preparing a multi-element, regionally doped, cobalt-free positive electrode material according to any one of claims 3 to 5, **characterized by** that in step (4), a molar ratio of the lithium salt to the wet-doped cobalt-free precursor is 1 to 1.15: 1; and the rotation speed of the ball mill is 200 to 600 rpm.

10. The method of preparing a multi-element, regionally doped, cobalt-free positive electrode material according to any one of claims 3 to 5, **characterized by** that in step (4), the sintering atmosphere is an oxygen atmosphere, and the sintering conditions are: first sintering at 200-600°C for 2-9 h, and then heating to 800-1200°C and sintering for 10-30h.
